# EUROPEAN PATENT APPLICATION

(11) **EP 3 395 724 A1**
(43) Date of publication of application: **31.10.2018**
(21) Application number: 17167972.3
(22) Date of filing: 25.04.2017
(51) Int. Cl.: B65G 1/06, A62C 3/07, A62C 35/10

(54) **A MULTI-STOREY GOODS STORAGE CART WITH FIRE EXTINGUISHER**

(71) Applicant: Logevo AB, 34334 Älmhult (SE)
(72) Inventor: SVENSSON, Kim, 31261 Mellbystrand (SE)
(74) Representative: Persson, Albin

(57) **Abstract**

A shuttle (22) with a fire extinguisher (44) arranged to operate in a multi-storey goods storage arrangement (10) comprising a plurality of levels of storage lines (12) arranged in parallel, and transport aisles (18) extending in parallel between opposing ends of sets said storage lines. The fire extinguisher (44) comprises an enclosure (46) containing a fire extinguishing medium under pressure, wherein said enclosure (46) extends within and over a substantial part of an inner space of the shuttle. At least a section (58) of the enclosure (46) is formed by a heat sensitive material that will rupture or melt in case of a fire in said inner space. The inner space of the shuttle is enclosed by a bottom (30), a top (32), and front, back and side walls (24, 26, 28), so as to restrict discharge of said fire extinguishing medium outside the inner space.

## Description

### TECHNICAL FIELD

A multi-storey goods storage shuttle with fire extinguisher for use in a multi-storey goods storage arrangement comprising a plurality of levels of storage lines arranged in parallel, each storage line supporting a plurality of pallets or baseboards with packages, and transport aisles extending in parallel between opposing ends of sets of said storage lines, wherein carts are operable along each transport aisle and a plurality of other carts are arranged for picking packages in said storage lines and for delivering packages on conveyors. The shuttle is arranged to operate into and out from storage lines supporting baseboards or pallets.

### BACKGROUND

Multi-storey goods storage arrangements or pallet racks are used in a wide area of applications, such as conventional warehouses, storages and stores. Goods, such as packages or cases, are normally arranged on pallets that are transported in the multi-storey goods storage arrangement by different kinds of carts, carriages, shuttles and conveyors. In automated multi-storey goods storage arrangements, the carts, carriages, shuttles and conveyors are controlled by computer systems and pick up, transport, store and deliver goods without human influence. Carts, carriages, shuttles and conveyors are normally propelled by electrical motors, for instance operated by batteries or capacitors.

In case of fire in a cart operating within the multi storey goods storage arrangement it is difficult to provide an efficient fire extinguishing system. Normally, no space is provided within the multi storey goods storage arrangement for a manual fire extinguishing process.

### SUMMARY OF THE INVENTION

It would be desirable to improve the fire extinguishing process in prior art multi-storey goods storage arrangement. In accordance with the invention a fire extinguisher is arranged inside the shuttle or cart. The fire extinguisher comprises an enclosure with a fire extinguishing medium under pressure. At least a section of the enclosure is formed by a heat sensitive material that will rupture or melt in case of a fire. The enclosure is formed and arranged to distribute the fire extinguishing medium efficiently within the shuttle. The efficiency in distributing and discharging the fire extinguishing medium is further improved by enclosing the cart by a bottom, a top and side walls.

In various embodiments, the fire extinguisher enclosure is formed as a closed tube. The tube preferably is flexible so that it can be mounted in a curled or curved configuration and cover components at risk inside the shuttle. Such components comprise batteries and/or large capacitors, such as supercapacitors that will provide energy for the propulsion of the shuttle or cart. The closed tube preferably is hold in a suitable position within the shuttle, for instance by strips attached to side walls or a bottom sheet.

Preferably, the closed tube is provided with a gauge indicating at least the present pressure of the fire extinguishing medium under pressure. In various embodiments, the gauge is arranged at one end of the closed tube. The gauge comprises at least a pressure sensor indicating the present pressure of the fire extinguishing medium. In various embodiments, the gauge is provided with a display indicating present pressure in view of different intervals, one interval indicating too low pressure.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: is a schematic top view of a basic multi-storey goods storage arrangement where shuttles and carts operate,
- Fig. 2: is a schematic perspective view of one embodiment of a shuttle with a fire extinguisher in accordance with the invention,
- Fig. 3: is a schematic perspective view of the shuttle shown in Fig. 2 and partly cut open, and
- Fig. 4: is a schematic perspective view of a cut out section of the fire extinguisher with a gauge shown in Fig. 3.

### DETAILED DESCRIPTION

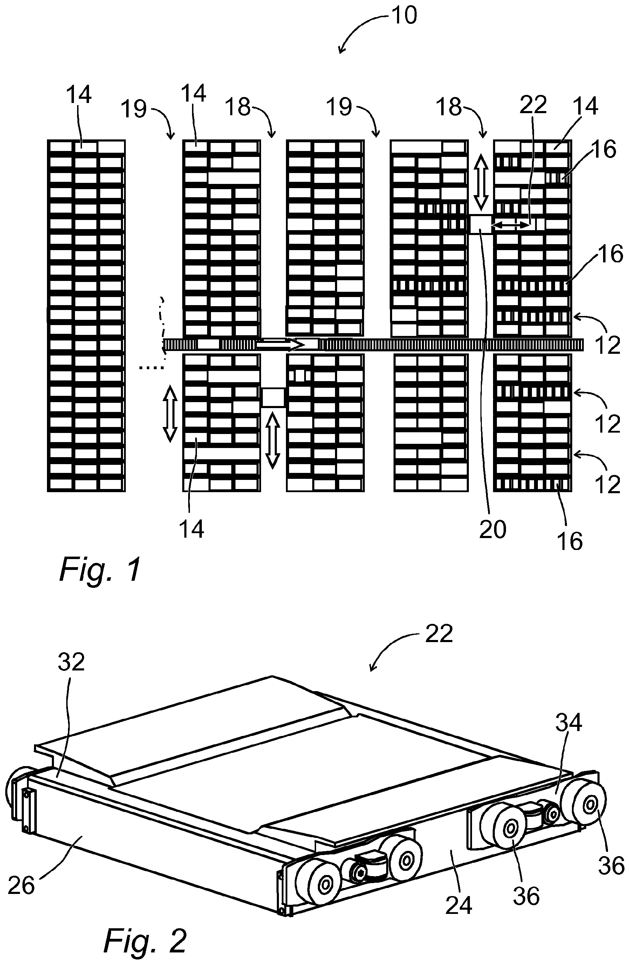

A basic multi-storey goods storage arrangement or pallet racking 10 shown in Fig. 1 comprises a plurality of levels of storage lines 12 in which pallets or baseboards 14 with packages 16 are stored. The storage lines 12 extend in two opposite directions from transport lines or aisles 18 extending between opposite ends of said storage lines 12, said transport lines 18 also having a plurality of levels. Transfer carts 20 supporting a shuttle 22 operate in said transport lines 18 in a direction perpendicular to the storage lines 12. The shuttle 22 is supported in a conventional way on a rail system in a lower section of the transfer cart 20. A corresponding rail system extends along said storage lines 12 to allow said shuttle 22 to transport pallets 14 to and from selected positions along said storage lines 12.

The shuttle 22 moves from the transfer cart 20 into the storage lines 12 and back carrying pallets or baseboards 14 with or without packages 16. The shuttle 22 can be provided with support means that can be raised in position under a baseboard 14 and kept in a raised position during transport in the storage line 12. When packages have reached an intended position in the storage line or elsewhere the support means is lowered and the packages will rest on rails or load beams or on the baseboard transfer cart 20.

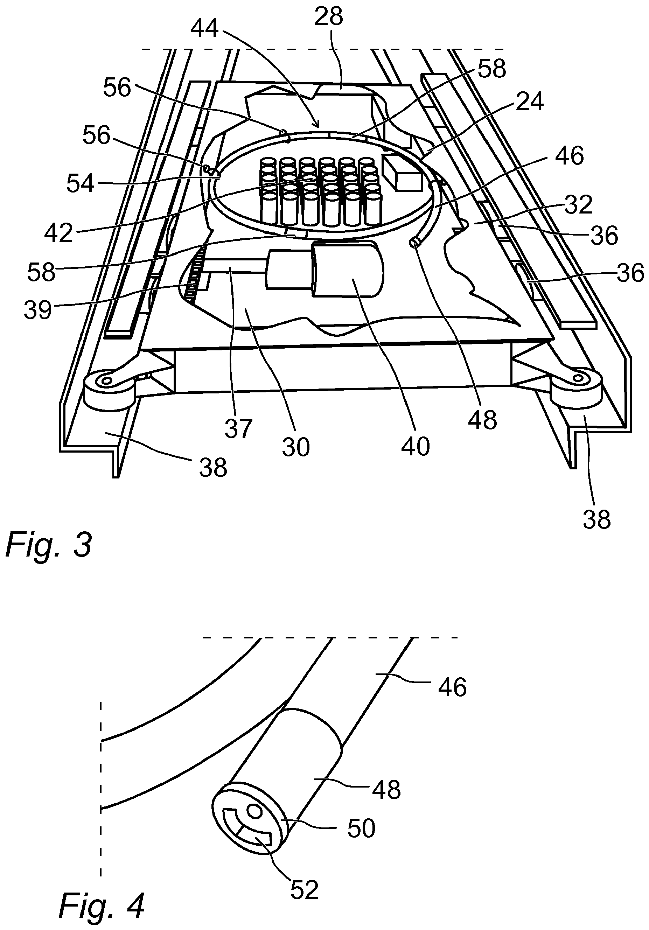

In the embodiment shown in Fig. 2 and Fig. 3 the shuttle 22 is formed as a box with a supporting framework. The box forms an inner space enclosed by two opposite side sheets 24, and a front sheet 26 and a back sheet 28 forming two further side sheets. The shuttle 22 also comprises a bottom plate 30 and a top plate 32. A wheel suspension is arranged in each corner of a basically rectangular shuttle. Each of those wheel suspensions comprises a bogie 34, which carries two rotatable shuttle wheels 36, displaced in the direction of movement of the shuttle. The shuttle wheels rotate in a vertical plane when the shuttle moves back and forth on rails 38.

In various embodiments, the shuttle is powered by an electric motor 40. The power used by the electric motor 40 and other electric equipment of the shuttle 22 is a mobile power supply comprising super capacitors 42 or similar charge storing devices. In such embodiments, the charge storing devices are charged when the shuttle is received in a cart. In other embodiments, the mobile power supply comprises batteries that are charged when the shuttle is positioned in a cart or an end position. In various embodiments, rails supporting the cart is provided with power lines supplying electrical power to the cart through sliding contacts (not shown). The electric motor 40 is connected to the shuttle wheels 36 through a shaft 37 and a chain mechanism 39.

An embodiment of a fire extinguisher 44 in accordance with the invention shown in Fig. 3 comprises an enclosure 46 containing a fire extinguishing medium under pressure. As shown in Fig. 3 the enclosure 46 is a flexible tube having a length sufficiently large to be mounted in a curved or curled position over a substantial part of an inner space of the shuttle 22. At least a section of the enclosure is formed by a heat sensitive material that will rupture or melt in case of a fire in components in said inner space. The form and position of the flexible tube will direct discharge of said fire extinguishing medium to components and devices within the inner space of the shuttle.

In various embodiments, the tube 46, or at least sections thereof, is made of transparent plastic material which will rupture or melt if heated to raised temperatures such as about or over 120 degrees Celsius. The fire extinguishing medium can be Halon or preferably a suitable replacement material such as heptafluoropropane gas, HFC-227 EA. It will prevent or extinguish fires in situations where conventional extinguishing agents such as water, dry chemical, and carbon dioxide are unacceptable because they may cause collateral damage, significantly interrupt business productivity, or present a safety risk.

In various embodiments, the tube 46 is provided with a gauge 48. In the embodiment shown in Fig. 3 and Fig. 4 the gauge 48 is mounted at one end of the tube 46 while the other end is enclosed by other means, not shown. The gauge 48 comprises at least a pressure sensor 50 with a display 52 indicating an approved gas pressure interval, c.f. Fig. 4. The display can be read at service intervals or at any other time by removing the top plate 32.

In various embodiments, the complete tube 46 is formed by the heat sensitive material and ruptures or melting sections will occur where the heat affects the tube material. In some embodiments weakened sections, as indicated at 58 in Fig. 3, are formed by a material more heat sensitive than remaining sections of the tube. As a result, the fire extinguishing medium will be released and directed to positions within the shuttle 22 adjacent to the location of the weakened sections 58.

In various embodiments, the tube 46 is fixed in position by easily removable fastening means, such as strips 54 attached by pins 56 to side sheets 24 and/or bottom plate 30. Other attachment means can be used. The easily removable fastening means and the shape and flexibility of the tube 46 facilitates positioning of the tube 46 around or close to such components that are at risk within the shuttle 22. It is also easy to replace the tube 46, should the pressure or other measured properties of the fire extinguishing medium fall outside any predetermined levels.

While certain illustrative embodiments of the invention have been described in particularity, it will be understood that various other modifications will be readily apparent to those skilled in the art without departing from the inventive concept. Accordingly, it is not intended that the scope of the claims appended hereto be limited to the description set forth herein but rather that the claims be construed as encompassing all equivalents of the present invention which are apparent to those skilled in the art to which the invention pertains.

## Claims

1. A shuttle (22) with a fire extinguisher (44) arranged to operate in a multi-storey goods storage arrangement (10) comprising a plurality of levels of storage lines (12) arranged in parallel, and transport aisles (18) extending in parallel between opposing ends of sets said storage lines, ***characterised* in that**
the fire extinguisher (44) comprises an enclosure (46) containing a fire extinguishing medium under pressure, wherein said enclosure (46) extends within and over a substantial part of an inner space of the shuttle,
at least a section (58) of the enclosure (46) is formed by a heat sensitive material that will rupture or melt in case of a fire in said inner space, and
the inner space of the shuttle is enclosed by a bottom (30), a top (32), and front, back and side walls (24, 26, 28), so as to restrict discharge of said fire extinguishing medium outside the inner space.

2. A shuttle (22) with a fire extinguisher (44) as claimed in claim 1, wherein the enclosure (46) is a tube.

3. A shuttle (22) with a fire extinguisher (44) as claimed in claim 2, wherein
the complete tube is formed by a heat sensitive material that will rupture or melt in case of a fire in said inner space.

4. A shuttle (22) with a fire extinguisher (44) as claimed in claim 2, wherein
the tube is mounted in a curved or curled position over a substantial part of said inner space.

5. A shuttle (22) with a fire extinguisher (44) as claimed in claim 1, wherein
the enclosure (46) is arranged in a fixed position by fastening means (54; 56) attached to the side walls (26; 26; 28).

6. A shuttle (22) with a fire extinguisher (44) as claimed in claim 1, wherein
fire extinguishing medium is Halon or a suitable replacement material such as heptafluoropropane gas, HFC-227 EA.
